# EUROPEAN PATENT SPECIFICATION

(11) **EP 3 623 232 B1**
(45) Date of publication and mention of the grant of the patent: **07.06.2023**
(21) Application number: 18193704.6
(22) Date of filing: 11.09.2018
(51) Int. Cl.: B60R 25/09, B62H 3/04, B60P 3/077

(54) **VEHICLE SECURITY APPARATUS**
SICHERHEITSVORRICHTUNG FÜR EIN FAHRZEUG
APPAREIL DE SÉCURITÉ DU VÉHICULE

(43) Date of publication of application: 18.03.2020
(73) Proprietor: Suip Manufacturing Limited, Dromard, County Sligo (IE)
(72) Inventor: McCloat, William Pius, County Sligo (IE)
(74) Representative: MacLachlan & Donaldson

(56) References cited:
- WO-A1-94/13513
- WO-A2-2005/021325
- GB-A- 2 558 631
- JP-A- 2009 083 738
- US-A- 5 755 125
- US-A1- 2009 019 901

## Description

The invention relates to vehicle security apparatus, particularly but not exclusively to apparatus for securing the position of ATVs (All Terrain Vehicles), UTVs (Universal Terrain Vehicles), Ride on Lawnmowers/Tractor Type Lawnmowers, Mini Tractors and the like. The invention is especially suitable for "Quads" which are used extensively on many farms, forests and other countryside terrain.

Security devices for protecting motor vehicles against theft are well known. These devices include both mechanical and electrical apparatus which may be used either separately or in combination. The electrical apparatus presently available guard against theft by either preventing a vehicle from being driven or by signalling an attempted theft by means of an alarm. Electrical devices generally prevent vehicles from being driven by immobilising means which prevent the correct operation of the ignition system or other electrical system necessary for control of the engine. The attempted theft of a vehicle is generally signalled by electrical apparatus through the use of sirens and lights mounted on the motor vehicle in question.

The mechanical devices currently available also guard against theft by preventing a motor vehicle from being driven. This is generally achieved through the use of clamps or other similar devices arranged to restrict the movement of the primary controls, such as the steering wheel or the foot pedals.

WO 2005/021325 discloses a vehicle security apparatus comprising a base member adapted to be fixedly secured to a substantially immoveable object; vehicle retaining means adapted to retain part of a vehicle in order to restrict movement of the vehicle relative to the retaining member the retaining means being pivotally moveable between a vehicle-retaining position and a non-retaining position; and locking means for locking the retaining means in the retaining position, wherein the vehicle retaining means comprise a pivotally moveable securing element engageable about a wheel of a vehicle and the security element and engaged wheel being moveable into a secure position which is not accessible.

The problem with these known security devices is that they are all self-contained within the motor vehicle that they protect. The known security devices do not prevent the physical removal of a motor vehicle. Even if fitted with a conventional security device, small motor vehicles such as Quads may be stolen by simply lifting them onto a second vehicle to a desired location. Any fitted security device may then be removed unnoticed with a suitable tool such as a bolt cutter or a hacksaw.

It is an object of the present invention to provide vehicle security apparatus which prevents the physical removal of motor vehicles.

It is a further object of the present invention to provide vehicle security apparatus which cannot be overcome with conventional tools such as a bolt cutter, a hacksaw or a sledgehammer.

A simple but effective way to secure a vehicle to an immoveable object, so that the vehicle cannot be removed, has now been developed.

Accordingly, there is provided a vehicle security apparatus comprising a base member adapted to be fixedly secured to a substantially immoveable object; vehicle retaining means adapted to retain part of a vehicle in order to restrict movement of the vehicle relative to the retaining member, the retaining means being pivotally moveable between a vehicle- retaining position and a non-retaining position; and locking means for locking the retaining means in the retaining position, wherein the vehicle retaining means comprise a pivotally moveable securing element engageable about a wheel of a vehicle and the security element and engaged wheel being moveable into a secure position which is not accessible, the vehicle retaining means comprises a fixed retainer and a wheel support bracket to pivot from a wheel receiving position through an intermediate position to a wheel secured position; characterised in tha ta second locking means is provided on side wall of the fixed retainer, the second locking means being engageable with the centre of the wheel retained in the vehicle security apparatus.

Advantageously, the base member comprises a plate having a plurality of orifices for the receipt of high tensile steel tamper proof bolts thereby enabling the apparatus to be securely fixed to a concrete base or the like.

Conveniently, the vehicle retaining means comprises a fixed retainer and a wheel support bracket pivotally attached to the fixed retainer adapted to allow the wheel support bracket to pivot from a wheel receiving position, through an intermediate position to a wheel secured position.

Ideally, the fixed retainer has a curved front wall, a complete side wall of a sufficient size to shield a received wheel from access and a first locking means for locking the wheel support bracket in position.

Preferably, the wheel support bracket comprises a pair of spaced apart L-shaped brackets connected together by three transversely mounted bars, a first bar at the first end of the L-shaped brackets, a second bar at the second end of the L-shaped brackets and a third bar intermediate the first and second ends, the first bar being engageable with the first locking means when in the closed position, the second bar acting as a handle for grasping by a user and the third bar acting as a pivot bar pivotally connecting the support bracket with the retainer.

Conveniently, a second locking means is provided on the side wall of the fixed retainer, the second locking means being engageable with the centre of the wheel retained in the vehicle security apparatus.

The second locking means may be spring loaded into an open orientation so that when the locking means is released, it moves into the open orientation.

Ideally, the second locking means includes a wheel engaging plate which is engageable in a well in the side wall of the retainer in the open orientation.

The wheel engaging plate may be located at one end of an elongate moveable member, mounted within a sleeve fixed to the side wall of the fixed retainer.

Preferably, a lock is provided at or adjacent to the sleeve and is operable to lock the moveable member to the sleeve.

This is a user friendly quick action security apparatus for ATVs, Quad Bikes, UTVs, Ride on Lawnmowers/Tractor Lawnmowers, Mini Tractors. The user is able to drive or reverse any of the above vehicles onto the vehicle security apparatus, aligning a front or a rear wheel of the vehicle onto the apparatus, which swings around the wheel, the forward motion wrapping the moveable securing element around the wheel. A solid metal bar engages in locking means which is then engaged and the solid metal bar is locked securely in place. A centre wheel locking means is then pushed into place by the user and locked using a secured locking means. This action locks the wheel securely in place using the rim of the vehicle, and prevents the wheel from moving backwards or upwards. Also, the wheel cannot be accessed or removed. The entire apparatus is bolted to the floor by four high tensile steel tamper proof bolts. These bolts cannot be accessed because the vehicle is already locked in place covering all four bolts.

The vehicle security apparatus secures the vehicle in such a way that no chains or any other means is required to secure the vehicle. This is a quick action user friendly apparatus. The wheel of the vehicle is secured in such a way so that no one can access it to remove it, making it impossible to take away the vehicle. The secured locking mans is spring loaded and retracts automatically when unlocked, releasing the wheel.

The advantage offered by the vehicle security apparatus is the impossibility in accessing the wheel studs of the vehicle wheel for removing the wheel. Also the first locking means lock is internal and cannot be accessed when the vehicle is locked onto the vehicle security apparatus.

These and other aspects of the invention are disclosed in the attached claims which are hereby incorporated into this description.

The invention will hereinafter be more particularly described with reference to the accompanying drawings, which show by way of example only, one embodiment of a vehicle security apparatus, particularly a security apparatus for a Quad vehicle which locks about one wheel of the Quad, either a front or a rear wheel in this specific example. In the drawings:
Figure 1 is a perspective view from a front side and the front of the security apparatus in a closed orientation;
Figure 2 is a perspective view from the second side and the front of the security apparatus in the closed orientation;
Figure 3 is a perspective view from the second side of the rear of the security apparatus in an open orientation;
Figure 4 is a perspective view from the first side and the rear of the security apparatus in the closed orientation with a wheel of a Quad vehicle secured within the device;
Figures 5, 6 and 7 are side views of the second side of the security apparatus illustrating how the wheel of the Quad device moves onto the security apparatus from the open orientation into the closed orientation;

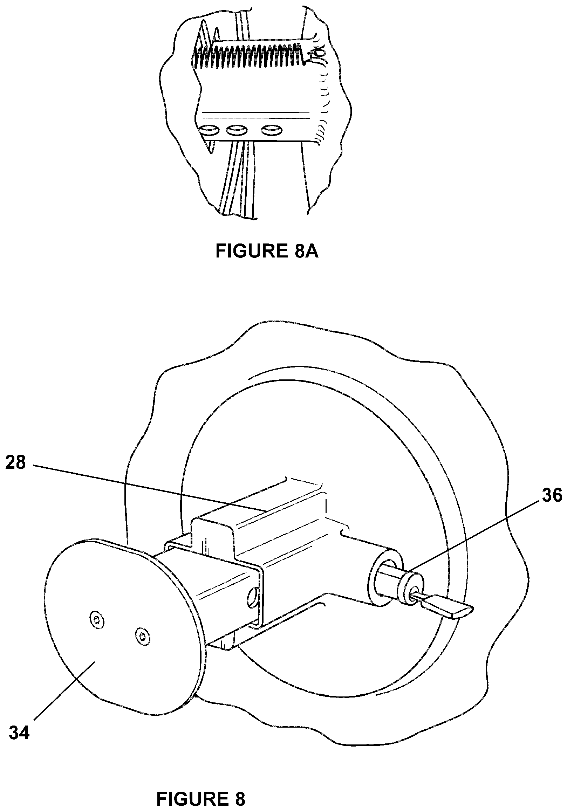

Figure 8 is a perspective view of a front locking device located on the first side of the security apparatus and Figure 8A is a perspective view of a detail of the internal mechanism of the front locking device;

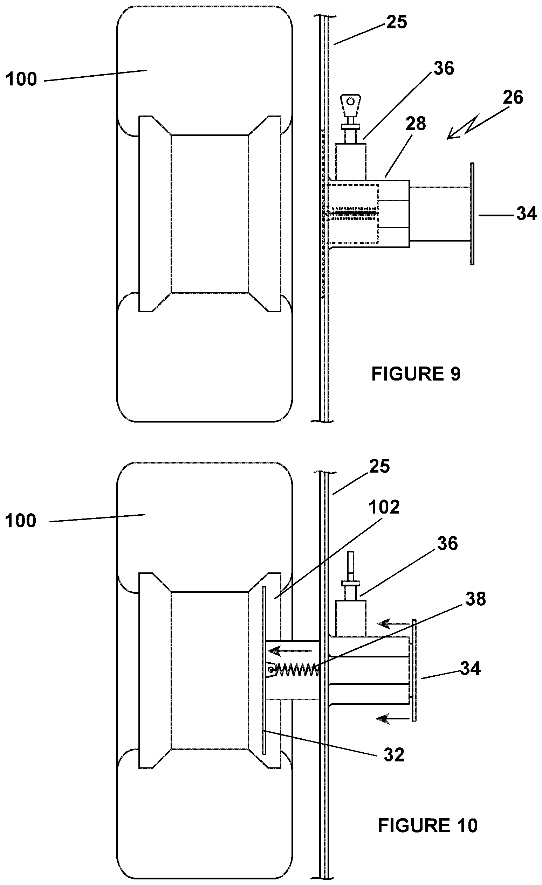

Figures 9 and 10 are cross end sectional views of the security apparatus and the secured wheel of the Quad vehicle.

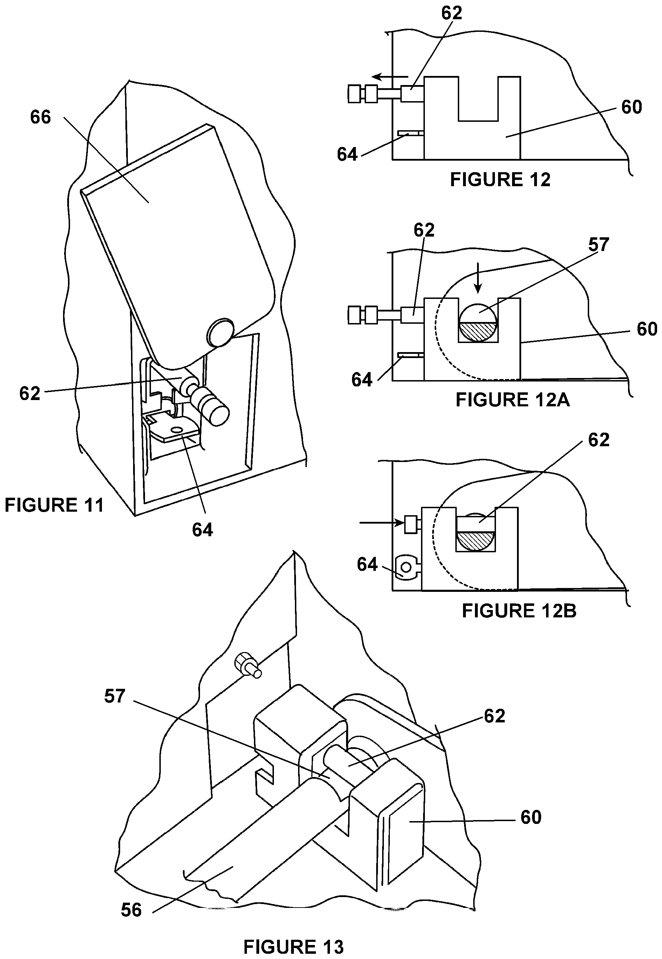

Figure 11 is a perspective view of the front of the second locking device;
Figures 12, 12A, and 12B are a series of three cross-sectional side views showing the stages in the operation of the second locking device; and
Figure 13 is a perspective view of the second locking device locked in position.

Referring to the drawings, vehicle security apparatus 10 operates by securely locking in position a wheel 100 of a vehicle such as a Quad bike (not shown). The vehicle security apparatus 10 has two main component parts, a fixed retainer 20 and a pivotally connected wheel support bracket 50. The wheel 100 may be a front or rear wheel either on the left or right hand side of the Quad bike. Thus the Quad bike may be driven onto the security apparatus 10 or reversed into it.

The fixed retainer 20 has a base plate 21 provided with four bolt holes 22 by which the retainer can be bolted in a secure location using four high tensile steel tamper proof bolts (not shown). The retainer 20 has a curved front wall 23 and a complete side wall 25. Attached to the side wall 25 is a wheel engaging locking assembly 26 for engaging with the central steel wheel body 102. The wheel engaging assembly 26 includes a fixed sleeve 28 housing a moveable member 30 which has a wheel engaging plate 32 at one end of the moveable member 30 and a handling plate 34 at the other end of the moveable member 30. When the member 30 is extended, it can be locked in position by a key operated lock 36. When the lock 36 is opened to release the locking assembly 26, the entire assembly returns to the unlocked position under the action of spring 38. When the spring located mechanism returns to the open position, the wheel engaging plate 32 is seated in a well 40 formed in the side wall so as to not impede the travel of the wheel 100 into the fixed retainer 20.

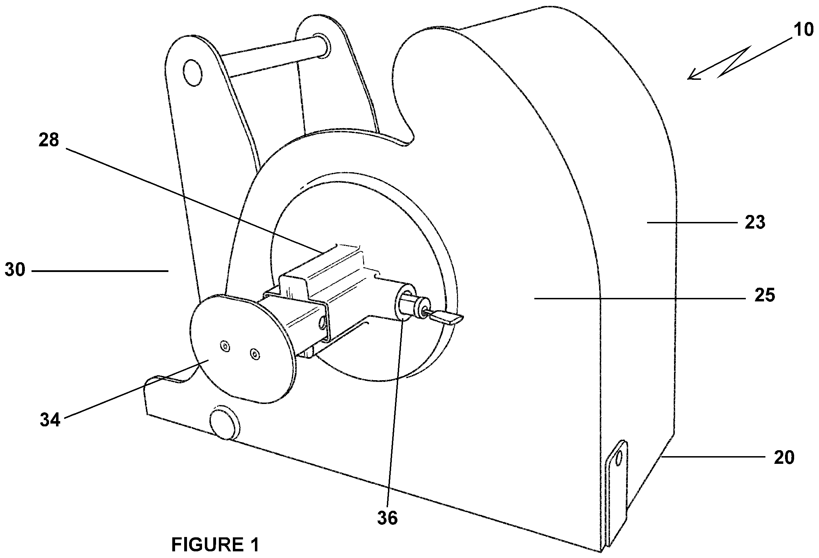

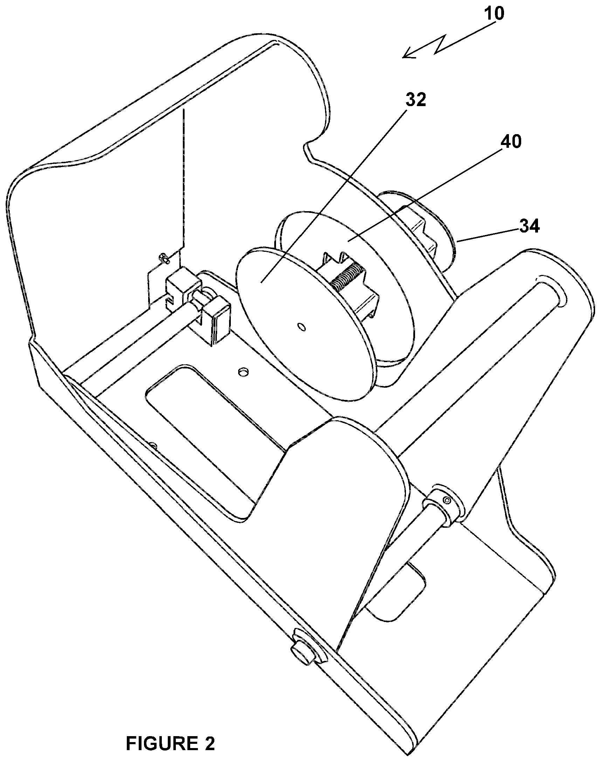

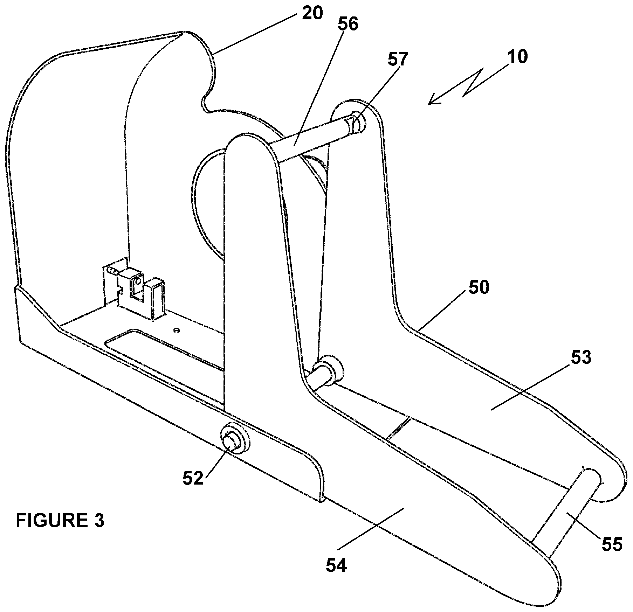

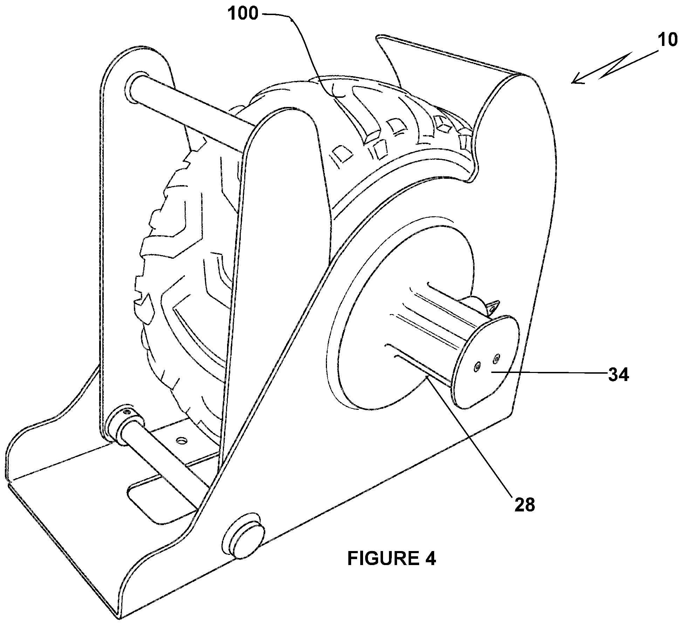

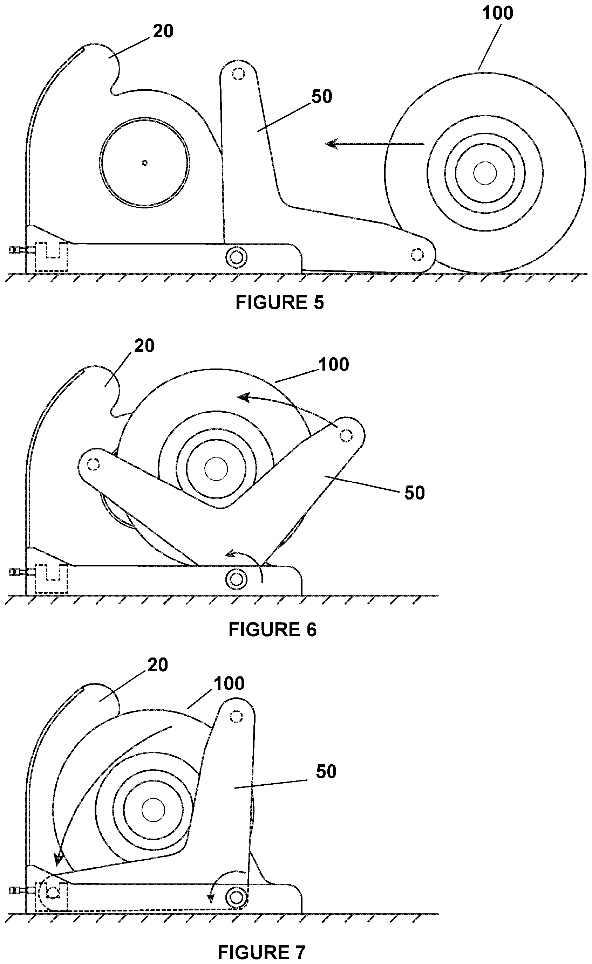

The wheel support bracket 50 is pivotally attached to the fixed retainer 20 by a pivot bar 52 which allows the wheel support bracket 50 to pivot from a wheel receiving position as shown in Figures 3 and 5, an intermediate position as shown in Figure 6 and a wheel secured position as shown in Figures 1, 2, 4 and 7. The wheel support bracket 50 comprises two L-shaped brackets 53 and 54 which are connected together by steel bars 55 and 56. The steel bar 56 is provided with a cut out 57 which slots into a key operated lock 60 having a locking bar 62 which is pushed in by the user to secure the lock and retained in position by turning the key 64. The key 64 can be removed and a flap 66 is closed to close access to the lock 60.

With two separate locking mechanisms and by virtue of the wheel covering the securing bolts of the apparatus, the entire apparatus is extremely secure and when manufactured from high strength material is almost indestructible. Also as the apparatus operates automatically by driving the first wheel onto the pivotally connected wheel support bracket, through the top dead centre location and into the final secured position, very little effort is required on the part of the user apart from activating the two locking mechanisms.

The design and arrangement of the actual locks used in the two locking mechanisms may be varied to suit particular requirements and may not be as shown or as located in the drawings. The locks may be mechanical or electrically operated and may be operated by keys or codes.

It is to be understood that the invention is not limited to the specific details described herein which are given by way of example only, and that various modifications are possible without department from the scope of the invention as defined in the appended claims.

## Claims

1. A vehicle security apparatus (10) comprising a base member (21) adapted to be fixedly secured to a substantially immoveable object; vehicle retaining means (20) adapted to retain part of a vehicle in order to restrict movement of the vehicle relative to the retaining member (20), the retaining means (20) being pivotally moveable between a vehicle- retaining position and a non-retaining position; and locking means (60) for locking the retaining means (20) in the retaining position, wherein the vehicle retaining means (20) comprise a pivotally moveable securing element (50) engageable about a wheel (100) of a vehicle and the securing element (50) and engaged wheel (100) being moveable into a secure position which is not accessible, in which the vehicle retaining means comprises a fixed retainer (20) and a wheel support bracket (50) to pivot from a wheel receiving position through an intermediate position to a wheel secured position; **characterised in that** a second locking means (26) is provided on side wall (25) of the fixed retainer (20), the second locking means (26) being engageable with the centre of the wheel (100) retained in the vehicle security apparatus.

2. A vehicle security apparatus as claimed in Claim 1, in which the base member comprises a plate (21) having a plurality of orifices (22) for the receipt of high tensile steel tamper proof bolts thereby enabling the apparatus to be securely fixed to a concrete base or the like.

3. A vehicle security apparatus as claimed in Claim 1 or Claim 2 in which the fixed retainer (20) has a curved front wall (23), a complete side wall (25) of a sufficient size to shield a received wheel (100) from access and a first locking means (60) for locking the wheel support bracket in position.

4. A vehicle security apparatus as claimed in Claim 3, in which the wheel support bracket (50) comprises a pair of spaced apart L-shaped brackets (53,54) connected together by three transversely mounted bars (55,56,52), a first bar (55) at the first end of the L-shaped brackets (53,54), a second bar (56) at the second end of the L-shaped brackets (53,54) and a third bar (52) intermediate the first and second ends, the first bar (55) being engageable with the first locking means (60) when in the closed position, the second bar (56) acting as a handle for grasping by a user and the third bar (52) acting as a pivot bar pivotally connecting the support bracket (50) with the retaining means (20).

5. A vehicle security apparatus as claimed in any one of the preceding claims, in which the second locking means (26) is spring loaded into an open orientation so that when the locking means (26) is released, it moves into the open orientation.

6. A vehicle security apparatus as claimed in any one of the preceding claims, which the second locking (26) means includes a wheel engaging plate (32) which is engageable in a well (40) in the side wall (25) of the retainer (20) in the open orientation.

7. A vehicle security apparatus as claimed in Claim 6, in which the wheel engaging plate (32) is located at one end of an elongate moveable member (30), mounted within a sleeve (28) fixed to the side wall (25) of the fixed retainer (20).

8. A vehicle security apparatus as claimed in Claim 7 in which a lock (36) is provided at or adjacent to the sleeve (28) and is operable to lock the moveable member (30) to the sleeve.

## Patentansprüche

1. Fahrzeugsicherheitsvorrichtung (10), umfassend ein Basiselement (21), das angepasst ist, um fest an einem im Wesentlichen unbeweglichen Objekt befestigt zu werden; Fahrzeugrückhalteeinrichtungen (20), die angepasst sind, um einen Teil eines Fahrzeugs zurückzuhalten, um die Bewegung des Fahrzeugs in Bezug auf das Rückhalteelement (20) einzuschränken, wobei die Rückhalteeinrichtungen (20) zwischen einer Fahrzeugrückhalteposition und einer Nichtrückhalteposition schwenkbar bewegbar sind, und Verriegelungseinrichtungen (60) zum Verriegeln der Rückhalteeinrichtungen (20) in der Halteposition, wobei die Fahrzeugrückhalteeinrichtungen (20) ein schwenkbar bewegliches Sicherungselement (50) umfasst, das um ein Rad (100) eines Fahrzeugs in Eingriff gebracht werden kann, und wobei das Sicherungselement (50) und das eingegriffene Rad (100) in eine gesicherte Position bewegt werden können, die nicht zugänglich ist, wobei die Fahrzeugrückhalteeinrichtungen einen festen Halter (20) und einen Radhalterung (50) umfassen, um von einer Radaufnahmeposition über eine Zwischenposition in eine radgesicherte Position zu schwenken; **dadurch gekennzeichnet, dass** eine zweite Verriegelungseinrichtung (26) an der Seitenwand (25) des festen Halters (20) bereitgestellt ist, wobei die zweite Verriegelungseinrichtung (26) mit der Mitte des in der Fahrzeugsicherheitsvorrichtung zurückgehaltenen Rads (100) in Eingriff gebracht werden kann.

2. Fahrzeugsicherheitsvorrichtung nach Anspruch 1, wobei das Basiselement eine Platte (21) umfasst, die eine Vielzahl von Öffnungen (22) zur Aufnahme von manipulationssicheren Schrauben aus hochfestem Stahl aufweist, wodurch ermöglicht wird, dass die Vorrichtung fest an einem Betonsockel oder dergleichen befestigt wird.

3. Fahrzeugsicherheitsvorrichtung nach Anspruch 1 oder Anspruch 2, wobei der feste Halter (20) eine gebogene vordere Wand (23), eine vollständige Seitenwand (25) ausreichender Größe, um ein aufgenommenes Rad (100) vor einem Zugriff abzuschirmen, und eine erste Verriegelungseinrichtung (60) zum Verriegeln der Radhalterung in ihrer Position aufweist.

4. Fahrzeugsicherheitsvorrichtung nach Anspruch 3, wobei die Radhalterung (50) ein Paar voneinander beabstandeter L-förmiger Bügel (53,54), die durch drei quer montierte Stangen (55,56,52) miteinander verbunden sind, eine erste Stange (55) an dem ersten Ende der L-förmigen Bügel (53,54), eine zweite Stange (56) an dem zweiten Ende der L-förmigen Bügel (53,54) und eine dritte Stange (52) zwischen dem ersten und dem zweiten Ende umfasst, wobei die erste Stange (55) mit der ersten Verriegelungseinrichtung (60) in Eingriff gebracht werden kann, wenn sie in der geschlossenen Position ist, die zweite Stange (56) als ein Griff zum Ergreifen durch einen Benutzer dient und die dritte Stange (52) als eine Schwenkstange dient, die Halterung (50) schwenkbar mit der Rückhalteeinrichtung (20) verbindet.

5. Fahrzeugsicherheitsvorrichtung nach einem der vorherigen Ansprüche, wobei die zweite Verriegelungseinrichtung (26) in eine offene Ausrichtung federbelastet ist, sodass sie in die offene Ausrichtung bewegt wird, wenn die Verriegelungseinrichtung (26) gelöst wird.

6. Fahrzeugsicherheitsvorrichtung nach einem der vorherigen Ansprüche, wobei die zweite Verriegelungseinrichtung (26) eine Radeingriffsplatte (32) beinhaltet, die in eine Vertiefung (40) in der Seitenwand (25) des Halters (20) in der offenen Ausrichtung eingreifen kann.

7. Fahrzeugsicherheitsvorrichtung nach Anspruch 6, wobei sich die Radeingriffsplatte (32) an einem Ende eines länglichen beweglichen Elements (30) befindet, das in einer Hülse (28) montiert ist, die an der Seitenwand (25) des festen Halters (20) befestigt ist.

8. Fahrzeugsicherheitsvorrichtung nach Anspruch 7, wobei eine Verriegelung (36) an oder neben der Hülse (28) bereitgestellt ist und betätigt werden kann, um das bewegliche Element (30) an der Hülse zu verriegeln.

## Revendications

1. Appareil de sécurité de véhicule (10) comprenant un élément de base (21) adapté pour être fixé de manière sécurisée à un objet sensiblement immobile ; des moyens de retenue de véhicule (20) adaptés pour retenir une partie d'un véhicule afin de restreindre le mouvement du véhicule par rapport à l'élément de retenue (20), les moyens de retenue (20) pouvant pivoter entre une position de retenue de véhicule et une position de non retenue ; et un moyen de verrouillage (60) destiné à verrouiller le moyen de retenue (20) dans la position de retenue, lesdits moyens de retenue de véhicule (20) comprenant un élément de fixation mobile en pivotement (50) pouvant se mettre en prise autour d'une roue (100) d'un véhicule et l'élément de fixation (50) et la roue (100) en prise étant mobile dans une position sécurisée qui n'est pas accessible, dans lequel le moyen de retenue de véhicule comprend un dispositif de retenue fixe (20) et une console de support (50) de roue pour pivoter à partir d'une position de réception de roue par une position intermédiaire jusqu'à une position sécurisée des roues ; **caractérisé en ce qu'**un second moyen de verrouillage (26) est disposé sur la paroi latérale (25) du dispositif de retenue fixe (20), le second moyen de verrouillage (26) pouvant être en prise avec le centre de la roue (100) retenue dans l'appareil de sécurité de véhicule .

2. Appareil de sécurité de véhicule selon la revendication 1, dans lequel l'élément de base comprend une plaque (21) comportant une pluralité d'orifices (22) pour la réception de boulons inviolables en acier à haute résistance permettant ainsi à l'appareil d'être solidement fixé à une base en béton ou similaire.

3. Appareil de sécurité de véhicule selon la revendication 1 ou la revendication 2, dans lequel le dispositif de retenue fixe (20) comporte une paroi avant incurvée (23), une paroi latérale complète (25) d'une taille suffisante pour protéger une roue (100) reçue d'un accès et un premier moyen de verrouillage (60) destiné à verrouiller la console de support de roue en position.

4. Appareil de sécurité de véhicule selon la revendication 3, dans lequel la console de support (50) de roue comprend une paire de consoles en forme de L espacées (53,54) reliées ensemble par trois barres montées transversalement (55,56,52), une première barre (55) au niveau de la première extrémité des consoles en forme de L (53,54), une deuxième barre (56) au niveau de la seconde extrémité des consoles en forme de L (53,54) et une troisième barre (52) entre les première et seconde extrémités, la première barre (55) pouvant être en prise avec le premier moyen de verrouillage (60) lorsqu'elle est dans la position fermée, la deuxième barre (56) agissant en tant que poignée pour être saisie par un utilisateur et la troisième barre (52) agissant en tant que barre de pivot raccordant de manière pivotante la console de support (50) aux moyens de retenue (20).

5. Appareil de sécurité de véhicule selon l'une quelconque des revendications précédentes, dans lequel le second moyen de verrouillage (26) est chargé par ressort dans une orientation ouverte afin que lorsque le moyen de verrouillage (26) est relâché, il se déplace dans l'orientation ouverte.

6. Appareil de sécurité de véhicule selon l'une quelconque des revendications précédentes, dans lequel le second moyen de verrouillage (26) comprend une plaque de mise en prise (32) de roue qui peut être mise en prise dans un puits (40) dans la paroi latérale (25) du dispositif de retenue (20) dans l'orientation ouverte.

7. Appareil de sécurité de véhicule selon la revendication 6, dans lequel la plaque de mise en prise (32) de roue est située au niveau d'une extrémité d'un élément mobile allongé (30), monté à l'intérieur d'un manchon (28) fixé à la paroi latérale (25) du dispositif de retenue fixe (20).

8. Appareil de sécurité de véhicule selon la revendication 7, dans lequel un verrou (36) est disposé au niveau du manchon (28) ou adjacent à celui-ci et sert à verrouiller l'élément mobile (30) au manchon.
